# EUROPEAN PATENT APPLICATION

(11) **EP 4 835 743 A1**
(43) Date of publication of application: **04.11.2026**
(21) Application number: 26175670.4
(22) Date of filing: 30.04.2026
(51) Int. Cl.: G06N 3/096, B60L 53/62, B60L 53/65, B60L 53/67, B60L 53/68, B60L 58/12, G01C 21/34, G01C 21/36, G06N 20/00

(54) **SYSTEMS AND METHODS FOR PREDICTING SPECIFICATION DATA OF CHARGING UNITS**

(30) Priority: 01.05.2025 US 202519195769
(71) Applicant: HERE Global B.V., 5611 ZT Eindhoven (NL)
(72) Inventor: NAYAK, Amarnath, Mumbai (IN); BEAUREPAIRE, Jerome, Courbevoie (FR)
(74) Representative: Potter Clarkson

(57) **Abstract**

A system (100), method (900), and apparatus (102) for generating specification data of one or more charging units (114) are provided. The system (100) retrieves training data associated with each charging unit (114) of the one or more charging units (114). The training data of each charging unit (114) of the one or more charging units (114) comprises charging event data pertaining to one or more charging events associated with the corresponding charging unit (114) of the one or more charging units (114). The system (100) trains a machine learning model to predict specification data of a charging unit (114) based on the training data. The system (100) receives input data associated with the charging unit (114) and causes the machine learning model to predict the specification data of the charging unit (114) based on the input data. The system (100) generates a vehicle (800) navigation function for a vehicle (802) based on the specification data.

## Description

### TECHNOLOGICAL FIELD

The present disclosure generally relates to electric vehicle infrastructure assessment, and more specifically relates to systems and methods for predicting specification data of a charging unit based on various features related to electric vehicle infrastructure.

### BACKGROUND

Electric vehicles (EVs) are rapidly gaining popularity as a sustainable alternative to traditional gasoline-powered vehicles. They offer significant environmental benefits by reducing greenhouse gas emissions and dependence on fossil fuels. However, the widespread adoption of EVs presents many notable challenges related to the availability, accessibility, and compatibility of charging stations and various service equipment available at the charging stations. The infrastructure for EV charging is still developing in many geographies and varies greatly by region. For example, in many less densely populated areas, the network of charging stations is sparse, making it difficult for EV owners to find convenient locations to recharge. This issue is further compounded by the fact that different EV models may have different charging requirements such as different types of charging connectors, leading to compatibility concerns at many stations.

The lack of detailed information about the specifications of EV charging units in an area presents several issues. For example, in the absence of the specifications of the chargers, the range and usability of the EVs remain uncertain, which leads to range anxiety for the occupants of the EVs. Additionally, the lack of accurate information on charger specifications, availability, and compatibility with certain EV models makes planning long trips challenging, further hindering EV adoption.

Current charging solutions do not take these factors into account and are therefore highly non-adaptive to user and EV requirements. Accordingly, better techniques for identifying specification of charging infrastructure are required. Additionally, there is a need for systems and methods for providing navigation recommendations and instructions for charging vehicles based on identifying charging infrastructures that are compatible with the vehicles. Still further, there remains a need for approaches tailored to EV charging that consider a multitude of features pertaining to vehicles, users associated with such vehicles, and various attributes related to charging points.

### BRIEF SUMMARY OF SOME EXAMPLE EMBODIMENTS

A system, method, and an apparatus for predicting specification data of one or more charging units are described. In one aspect, the system includes one or more processors and a memory configured to store computer-executable instructions. The one or more processors are configured to execute the instructions to retrieve training data associated with each charging unit of one or more charging units configured to supply power to electric vehicles. The training data associated with each charging unit of the one or more charging units comprises charging event data pertaining to one or more charging events associated with the corresponding charging unit of the one or more charging unit. The one or more processors are configured to execute the instructions to: train a machine learning model to predict specification data of a charging unit based on the training data; receive input data associated with the charging unit; cause the machine learning model to predict the specification data based on the input data; and generate a vehicle navigation function for a vehicle based on the specification data.

In one embodiment of the aspect, to generate the vehicle navigation function, the one or more processors are configured to execute the instructions to: obtain charging data associated with the vehicle; determine charger requirement data for the vehicle based on the charging data; determine whether the specification data satisfies the charger requirement data; if the specification data satisfies the charger requirement data, generate vehicle navigation instructions for a route starting from a source location and terminating at a location associated with the charging unit; and output the vehicle navigation instructions on a user interface or cause the vehicle to traverse at least a portion of the route based on the vehicle navigation instructions.

In one embodiment of the aspect, the charging data associated with the vehicle comprises one or more of a current charge level of a battery of the vehicle, a desired final charge level of the battery of the vehicle, a rated charging current for the battery of the vehicle, a rated charging voltage for the battery of the vehicle, a current temperature of the battery of the vehicle, or a maximum temperature for the battery of the vehicle.

In one embodiment of the aspect, the charger requirement data comprises one or more specifications of service equipment for charging the vehicle, wherein the one or more specifications include a connector type or connector electrical specifications.

In one embodiment of the aspect, the training data associated with each charging unit of the one or more charging units indicates: a charging duration of each charging event of the one or more charging events; a start time stamp associated with each charging event of the one or more charging events; an end time stamp associated with each charging event of the one or more charging events; a type of vehicle associated with each charging event of the one or more charging events; a model and make of the vehicle associated with each charging event of the one or more charging events; or a combination thereof.

In one embodiment of the aspect, the training data associated with each charging unit of the one or more charging units indicates vehicle distance travel (VDT) data of a road link associated with the corresponding charging unit of the one or more charging units.

In one embodiment of the aspect, the training data associated with each charging unit of the one or more charging units indicates trip data associated with the corresponding charging unit of the one or more charging units.

In one embodiment of the aspect, the training data associated with each charging unit of the one or more charging units indicates one or more user interactions with a user application associated with said charging unit on a user equipment, the one or more user interactions pertaining to each charging event of the one or more charging events.

In one embodiment of the aspect, the specification data indicates a connector standard, a connector power, a connector voltage, or a combination thereof.

In one embodiment of the aspect, the machine learning model is a first machine learning model. Additionally, the one or more processors are further configured to execute the instructions to train a second machine learning model to predict non-availability of a connector specification of the charging unit based on the training data.

In one embodiment of the aspect the training data are first training data, the charging event data are first charging event data, and the machine learning model is a first machine learning model. In such embodiment, the one or more processors are further configured to execute the instructions to retrieve second training data of each charging point of one or more charging points. The second training data of each charging point of the one or more charging points comprises second charging event data pertaining to one or more charging events associated with the corresponding charging point of the one or more charging points. Additionally, the one or more processors are further configured to execute the instructions to train a second machine learning model to predict a probability score of a connector specification of a charging point being compatible with the vehicle based on the second training data.

In another aspect, a computer-implemented method is described. The method includes retrieving training data associated with each charging unit of one or more charging units configured to supply power to electric vehicles. The training data of each charging unit of the one or more charging units comprises charging event data pertaining to one or more charging events associated with the corresponding charging unit of the one or more charging units. The method further includes: training a machine learning model to predict specification data of a charging unit based on the training data; receiving input data associated with the charging unit; causing the machine learning model to predict the specification data of the charging unit based on the input data; and generating a vehicle navigation function for a vehicle based on the specification data.

The following numbered paragraphs are disclosed:
1. A system, comprising:
   a memory configured to store computer-executable instructions; and
   one or more processors configured to execute the instructions to:
      retrieve training data associated with each charging unit of one or more charging units configured to supply power to electric vehicles, wherein the training data associated with each charging unit of the one or more charging units comprises charging event data pertaining to one or more charging events associated with the corresponding charging unit of the one or more charging unit;
      train a machine learning model to predict specification data of a charging unit based on the training data;
      receive input data associated with the charging unit;
      cause the machine learning model to predict the specification data based on the input data; and
      generate a vehicle navigation function for a vehicle based on the specification data.
2. The system of paragraph 1, wherein, to generate the vehicle navigation function, the one or more processors are configured to execute the instructions to:
   obtain charging data associated with the vehicle;
   determine charger requirement data for the vehicle based on the charging data;
   determine whether the specification data satisfies the charger requirement data;
   responsive to the specification data satisfying the charger requirement data, generate vehicle navigation instructions for a route starting from a source location and terminating at a location associated with the charging unit; and
   output the vehicle navigation instructions on a user interface or cause the vehicle to traverse at least a portion of the route based on the vehicle navigation instructions.
3. The system of paragraph 2, wherein the charging data associated with the vehicle comprises a current charge level of a battery of the vehicle, a desired final charge level of the battery of the vehicle, a rated charging current for the battery of the vehicle, a rated charging voltage for the battery of the vehicle, a current temperature of the battery of the vehicle, a maximum temperature for the battery of the vehicle, or a combination thereof.
4. The system of paragraph 2, wherein the charger requirement data comprises one or more specifications of service equipment for charging the vehicle, wherein the one or more specifications include a connector type or connector electrical specifications.
5. The system of paragraph 1, wherein the training data associated with each charging unit of the one or more charging units indicates:
   a charging duration of each charging event of the one or more charging events;
   a start time stamp associated with each charging event of the one or more charging events;
   an end time stamp associated with each charging event of the one or more charging events;
   a type of vehicle associated with each charging event of the one or more charging events;
   a model and make of the vehicle associated with each charging event of the one or more charging events; or
   a combination thereof.
6. The system of paragraph 1, wherein the training data associated with each charging unit of the one or more charging units indicates vehicle distance travel (VDT) data of a road link associated with the corresponding charging unit of the one or more charging units.
7. The system of paragraph 1, wherein the training data associated with each charging unit of the one or more charging units indicates trip data associated with the corresponding charging unit of the one or more charging units.
8. The system of paragraph 1, wherein the training data associated with each charging unit of the one or more charging units indicates one or more user interactions with a user application associated with said charging unit on a user equipment, the one or more user interactions pertaining to each charging event of the one or more charging events
9. The system of paragraph 1, wherein the specification data indicates a connector standard, a connector power, a connector voltage, or a combination thereof.
10. The system of paragraph 1, wherein the machine learning model is a first machine learning model, and wherein the one or more processors are further configured to execute the instructions to train a second machine learning model to predict non-availability of a connector specification of the charging unit based on the training data.
11. The system of paragraph 1, wherein the training data are first training data, wherein the charging event data are first charging event data, wherein the machine learning model is a first machine learning model, and wherein the one or more processors are further configured to execute the instructions to:
   retrieve second training data of each charging point of one or more charging points, wherein the second training data of each charging point of the one or more charging points comprises second charging event data pertaining to one or more charging events associated with the corresponding charging point of the one or more charging points; and
   train a second machine learning model to predict a probability score of a connector specification of a charging point being compatible with the vehicle based on the second training data.
12. A computer-implemented method, comprising:
   retrieving training data associated with each charging unit of one or more charging units configured to supply power to electric vehicles, wherein the training data of each charging unit of the one or more charging units comprises charging event data pertaining to one or more charging events associated with the corresponding charging unit of the one or more charging units;
   training a machine learning model to predict specification data of a charging unit of the one or more charging units based on the training data;
   receiving input data associated with the charging unit;
   causing the machine learning model to predict the specification data of the charging unit based on the input data; and
   generating a vehicle navigation function for a vehicle based on the specification data.
13. The computer-implemented method of paragraph 12, wherein generating the vehicle navigation function comprises:
   obtaining charging data associated with the vehicle;
   determining charger requirement data for the vehicle based on the charging data;
   determining whether the specification data satisfies the charger requirement data;
   responsive to the specification data satisfying the charger requirement data, generating vehicle navigation instructions for a route starting from a source location and terminating at a location associated with the charging unit; and
   outputting the vehicle navigation instructions on a user interface or causing the vehicle to traverse at least a portion of the route based on the vehicle navigation instructions.
14. The computer-implemented method of paragraph 13, wherein the charging data associated with the vehicle comprises a current charge level of a battery of the vehicle, a desired final charge level of the battery of the vehicle, a rated charging current for the battery of the vehicle, a rated charging voltage for the battery of the vehicle, a current temperature of the battery of the vehicle, a maximum temperature for the battery of the vehicle, or a combination thereof.
15. The computer-implemented method of paragraph 14, wherein the charger requirement data comprises one or more specifications of service equipment for charging the vehicle, wherein the one or more specifications include a connector type or connector electrical specifications.
16. The computer-implemented method of paragraph 12, wherein the training data associated with each charging unit of the one or more charging units indicates:
   a charging duration of each charging event of the one or more charging events;
   a start time stamp associated with each charging event of the one or more charging events;
   an end time stamp associated with each charging event of the one or more charging events;
   a type of vehicle associated with each charging event of the one or more charging events;
   a model and make of the vehicle associated with each charging event of the one or more charging events; or
   a combination thereof.
17. The computer-implemented method of paragraph 12, wherein the training data associated with each charging unit of the one or more charging units indicates a vehicle distance travel (VDT) data of a road link associated with the corresponding charging unit of the one or more charging units.
18. The computer-implemented method of paragraph 12, wherein the training data associated with each charging unit of the one or more charging units indicates trip data associated with the corresponding charging unit of the one or more charging units.
19. The computer-implemented method of paragraph 12, wherein the training data associated with each charging unit of the one or more charging units indicates one or more user interactions with a user application associated with said charging unit on a user equipment, the one or more user interactions pertaining to each charging event of the one or more charging events.
20. A non-transitory computer readable storage medium including one or more sequences of one or more instructions which, when executed by one or more processors, causes an apparatus to:
   retrieve training data associated with each charging unit of one or more charging units, wherein the training data of each charging unit of the one or more charging units comprises charging event data pertaining to one or more charging events associated with the corresponding charging unit of the one or more charging units;
   train a machine learning model to predict specification data of a charging unit, based on the training data;
   receive input data associated with the charging unit;
   cause the machine learning model to predict the specification data of the charging unit based on the input data; and
   generate a vehicle navigation function for a vehicle based on the specification data.

In another aspect, a non-transitory computer readable storage medium is described. The non-transitory computer readable storage medium includes one or more sequences of one or more instructions which, when executed by one or more processors, causes an apparatus to retrieve training data associated with each charging unit of one or more charging units. The training data of each charging unit of the one or more charging units comprises charging event data pertaining to one or more charging events associated with the corresponding charging unit of the one or more charging units. The one or more sequences of the one or more instructions which, when executed by the one or more processors, causes the apparatus to: train a machine learning model to predict specification data of a charging unit based on the training data; receive input data associated with the charging unit; cause the machine learning model to predict the specification data of the charging unit based on the input data; and generate a vehicle navigation function for a vehicle based on the specification data.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF DRAWINGS

Having thus described example embodiments of the invention in general terms, reference will now be made to the accompanying drawings, which are not necessarily drawn to scale, and wherein:
FIG. 1 illustrates a block diagram showing a network environment of an assessment platform for predicting specification data of a charging unit, in accordance with one or more example embodiments;
FIG. 2 illustrates components of the assessment platform 102 for generating specification data of one or more charging units, in accordance with one or more example embodiments;
FIG. 3A illustrates a block diagram showing an exemplary format of data stored in a vehicle database utilized by the assessment platform of FIG. 1, in accordance with one or more example embodiments;
FIG. 3B illustrates a block diagram showing a format of data stored in a charging unit database utilized by the assessment platform of FIG. 1, in accordance with one or more example embodiments;
FIG. 3C illustrates a block diagram showing a format of data stored in a charging point database utilized by the assessment platform of FIG. 1, in accordance with one or more example embodiments;
FIG. 4A illustrates a framework for generating navigation function based on specification data of one or more charging units, in accordance with one or more example embodiments;
FIG. 4B illustrates some examples of training data used for training one or more machine learning models for predicting charging unit specification data, in accordance with one or more example embodiments;
FIG. 4C illustrates some examples of input data used for predicting charging unit specification data, in accordance with one or more example embodiments;
FIG. 5 illustrates a flowchart of a process for generating navigation instructions based on specification data of one or more charging units, in accordance with one or more example embodiments;
FIG. 6 shows an example of a mobility graph utilized by the assessment platform of FIG. 1, in accordance with one or more example embodiments;
FIG. 7 illustrates a flowchart of a method for planning mobility of a vehicle based on specification data of one or more charging units, in accordance with one or more example embodiments;
FIG. 8 illustrates an exemplary use case scenario for implementing the method of FIG. 7, in accordance with one or more example embodiments; and
FIG. 9 illustrates a flowchart of a method for predicting specification data of one or more charging units, in accordance with one or more example embodiments.

### DETAILED DESCRIPTION

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses, systems, and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity but rather denote the presence of at least one of the referenced items. Moreover, various features are described which may be exhibited by some embodiments and not by others. Similarly, various requirements are described which may be requirements for some embodiments but not for other embodiments.

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received, and/or stored in accordance with embodiments of the present invention. Thus, the use of any such terms should not be taken to limit the spirit and scope of embodiments of the present invention.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (for example, a volatile or non-volatile memory device), may be differentiated from a "computer-readable transmission medium," which refers to an electromagnetic signal.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

As disused previously, the widespread adoption of EVs presents significant challenges related to the availability, accessibility, and compatibility of charging infrastructure. The infrastructure for EV charging is still developing in many geographies and varies greatly by region. There are many factors affecting the usage and adoption of EVs by users. An important category of such factors includes specifications of charging units provided at charging points. Since EVs usually have relatively short operational ranges as compared to fossil fuel-powered vehicles, EVs require frequent intermittent charging. Unlike fossil fuel-powered vehicles, which can be refueled quickly, electrically powered vehicles require a considerable amount of time to recharge the onboard battery. While there have been some attempts to reduce the charging time, such attempts have only been able to marginally reduce the recharge time of EVs, and therefore, users of such vehicles still have to adapt their daily schedules and plans to accommodate the charging time. It is highly frustrating for users of such vehicles to assimilate the uncertainties arising out of this requirement to recharge the vehicle into their daily lives. Also, due to the short operational range and the requirement to charge frequently, EVs are not considered suitable for long commutes or for busy drivers.

Also, due to the evolving nature of charging infrastructure in several geographies, there is uncertainty associated with availability of charging points. Users have to either rely on random attempts to find a suitable charging spot and time slot or they end up with extended waiting times and queues at such charging points. As such, while some charging points remain underutilized, others are overutilized, thereby requiring frequent repairs or maintenance. Furthermore, the rising popularity of peer-to-peer charging schemes, where visitor vehicles can be charged at a host's charging point, adds complexity to mobility planning for automated vehicle charging. This, in turn, exacerbates the challenges associated with operating EVs and their charging infrastructure.

Finding a suitable charging point for an EV depends on confirming its availability at the desired time or time slot, as well as ensuring that the charging infrastructure is compatible with the vehicle's charging requirements. However, the absence of detailed and up-to-date information on EV charger specifications in a given area makes finding suitable charging points a challenging and uncertain process.

Various example embodiments provided herein are directed towards computer-based systems for predicting specification data of a charging unit. Some example embodiments provide systems and methods for predicting navigation recommendations for charging vehicles. Some example embodiments are directed towards facilitating charging of a vehicle at a charging point that satisfies a plurality of requirements pertaining to the vehicle as well as to the infrastructure at the charging unit. Some example embodiments also provide charging recommendations tailored to the needs of user's vehicles. Various example embodiments are also directed toward determining the availability and compatibility of a charging unit with an EV prior to the commencement of a journey to a location of such charging unit. Accordingly, some embodiments provide systems and methods for generating a navigation route to a destination, based on factors such as charging requirements of a vehicle and specifications of a charging unit along the route. Some embodiments are further directed towards mobility planning of electric vehicles in view of charging requirements of vehicles and service equipment availability.

Thus, various example embodiments provide an improved approach that facilitates lower waiting times for charging the vehicles, ensures compatibility between vehicles and charging infrastructures, and enhances driving ranges of EVs. In essence, various example embodiments lead to better utilization of charging infrastructures while reducing the possibility of malfunction of such infrastructures due to incompatibility between the vehicles and infrastructures. Such advantages will be apparent from the following description of various example embodiments of the disclosure. The systems and methods for achieving these objectives will be explained herein, with the aid of various figures for clarity.

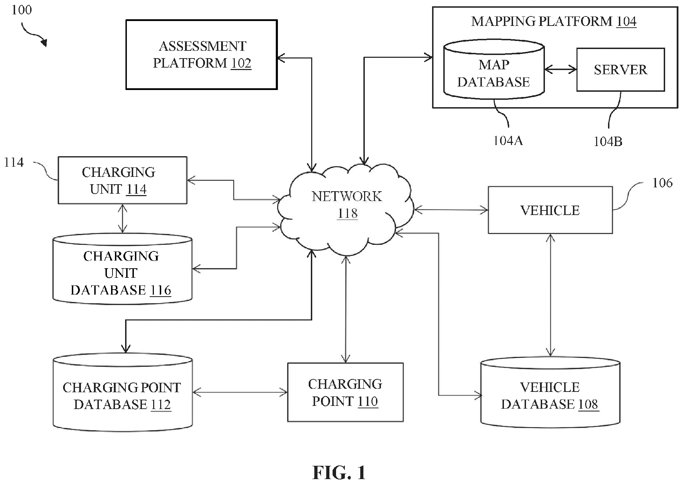

FIG. 1 illustrates a block diagram showing a network environment 100 of an assessment platform 102 for predicting specification data of a charging unit, in accordance with one or more example embodiments. Herein, a charging unit is a single device or infrastructure that is configured to provide charging to one or more electric vehicles. A charging unit may include one or more connectors, one or more cables, one or more electrical conductors, related equipment, software (including communications protocols), and any other components necessary to deliver electric power to one or more EVs safely and efficiently. In one embodiment, a charging unit may be an electric vehicle supply unit (EVSE), where the EVSE is a device that controls the power supply to a single EV in a single charging session. In one embodiment, an EVSE may include multiple connectors, but only one of the connectors can be active at the same time. In one embodiment, a charging unit is labeled with an electric vehicle supply equipment identifier (EVSEID), where the EVSEID is a unique identifier assigned to the charging unit and used to track and manage each of a plurality of charging units within a network. A charging point is a location, station, or facility equipped with one or more charging units. The assessment platform 102 may be communicatively coupled, via a network 118, to a mapping platform 104, a vehicle 106, a vehicle database 108 associated with the vehicle 106, a charging point 110, a charging point database 112 associated with the charging point 110, a charging unit 114, and a charging unit database 116 associated with the charging unit 114. While the illustrated embodiment depicts the charging point 110 and the charging unit 114 as separate entities, the charging unit 114 may be included in the charging point 110 in alternative embodiments. While the illustrated embodiment depicts the charging point database 112 and the charging unit database 116 as separate entities, the charging point database 112 and the charging unit database 116 may be combined in alternative embodiments.

According to some embodiments, in order to ensure anonymity, at least one of the charging unit 114, the charging point 110, and the vehicle 106 may be accessible to the assessment platform 102 via a respective original equipment manufacturer (OEM) cloud. According to some other embodiments, the vehicle 106 and the charging unit 114 may be directly coupled to the assessment platform 102. The components described in the network environment 100 may be further broken down into more than one component such as one or more sensors or applications in user equipment and/or combined together in any suitable arrangement. Further, it is possible that one or more components may be rearranged, changed, added, and/or removed without deviating from the scope of the present disclosure.

In an example embodiment, the assessment platform 102 may be embodied in one or more of several ways as per the desired implementation. For example, the assessment platform 102 may be embodied as a cloud-based service, a cloud-based application, a cloud-based platform, a remote server-based service, a remote server-based application, a remote server-based platform, or a virtual computing system. As such, the assessment platform 102 may be configured to operate inside the mapping platform 104 and/or the vehicle 106. In embodiments where the assessment platform 102 is included in the vehicle 106, the assessment platform 102 may be realized as an application executed by a processor. Some examples of such software applications include a navigation application, a mobility application, a personal assistant application, and the like.

In some embodiments, the vehicle 106 may be an EV associated with one or more users. As used herein, a user of the vehicle 106 may be a passenger or driver of the vehicle 106. In some embodiments, a charging unit 114 may be associated with or be communicatively coupled to a charging point, such as the charging point 110, that may be owned or operated by a host users. As used herein, a host user may be a person or entity providing vehicle charging service.

According to some embodiments, a user associated with the vehicle 106 may want to query whether charging of the vehicle 106 can be done at the charging unit 114 at a particular time of the day. Additionally or alternately, the user may want to find available and compatible charging units within a threshold distance from a desired location. Still further, in some embodiments, the user may want to generate a mobility plan for reaching a target location, where the mobility plan may include intermediate charging of the vehicle 106 in view of a mobility graph of the user. In such embodiments, the assessment platform 102 may determine the availability and feasibility of one or more charging units (such as the charging unit 114) associated with a charging point (such as the charging point 110). Such availability and feasibility of the one or more charging units may be determined in view of various features pertaining to: the vehicle 106, the charging point 110, one or more charging units associated with the charging point 110, the user associated with the vehicle 106, the user associated with the charging point 110, or a combination thereof. According to some other embodiments, the user associated with the vehicle 106 may want to commute between a source location and a destination location using the vehicle 106 and may want to explore the possibility of reaching the destination with intermediate charging. In such an embodiment, the assessment platform 102 may determine the availability and feasibility of charging the electric vehicle at the charging unit 114 in view of specification data of one or more charging units associated with the charging point 110. According to yet some other embodiments, the assessment platform 102 may automatically determine a future charging schedule for the vehicle 106 by determining the availability and feasibility of charging the vehicle 106 at the charging point 110 in view of a match between the charging requirements of the vehicle 106 and the specifications of one or more charging units associated with the charging point 110.

In each of such embodiments, the assessment platform 102 may be communicatively coupled to the components shown in FIG. 1 to carry out the desired operations. In some embodiments, the assessment platform 102 may be implemented in an electrically operable vehicle (hereinafter also referred to as a vehicle), where the vehicle may be an autonomous vehicle, a semi-autonomous vehicle, or a manually driven vehicle.

In some other embodiments, the assessment platform 102 may be embodied as a server 104B of the mapping platform 104 and therefore may be co-located with or within the mapping platform 104. In yet some other embodiments, the assessment platform 102 may be implemented within an OEM cloud. Further, in some example embodiments, the assessment platform 102 may be a standalone unit configured to perform mobility planning for charging of an electric vehicle. Additionally, the assessment platform 102 may be coupled with an external device such as an autonomous vehicle.

The mapping platform 104 may comprise the map database 104A (also referred to as geographic database 104A) for storing map data and a processing server 104B for carrying out the processing functions associated with the mapping platform 104. The map database 104A may store, as the map data, node data, road segment data or link data, point of interest (POI) data, road object data, or a combination thereof. The map database 104A may also store, as the map data, cartographic data, and/or routing data. The map database 104A may be maintained by a content provider e.g., a map developer.

As used with some embodiments, the map database 104A may be a master geographic database, but in alternate embodiments, the map database 104A may be embodied as a client-side map database and may represent a compiled navigation database that may be used in or with end-user equipment to provide navigation and/or map-related functions. For example, the map database 104A may be used with the vehicle 106 to provide a user with navigation features. In such a case, the map database 104A may be downloaded or stored locally (cached) on an equipment associated with the vehicle 106.

The processing server 104B may comprise processing means, and communication means. For example, the processing means may comprise one or more processors configured to process requests received from users such as the user associated with the vehicle 106. The processing means may fetch map data from the map database 104A and transmit the same to the vehicle 106 in a format suitable for use by the vehicle 106. In one or more example embodiments, the mapping platform 104 may periodically communicate with the vehicle 106 and/or a user equipment associated with the charging point 110 and/or the charging unit 114 via the processing server 104B to update a local cache of the map data stored on them. Accordingly, in some example embodiments, the map data may also be stored on the user equipment associated with the vehicle 106, the charging unit 114, and/or the charging point 110 and may be updated based on periodic communication with the mapping platform 104 via the network 118.

The network 118 may be wired, wireless, or any combination of wired and wireless communication networks, such as cellular, Wi-Fi, internet, local area networks, or the like. In one embodiment, the network 118 may include one or more networks such as a data network, a wireless network, a telephony network, or any combination thereof. It is contemplated that the data network may be any local area network (LAN), metropolitan area network (MAN), wide area network (WAN), a public data network (e.g., the Internet), short-range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks (e.g. LTE-Advanced Pro), 5G New Radio networks, ITU-IMT 2020 networks, code division multiple access (CDMA), wideband code division multiple access (WCDMA), wireless fidelity (Wi-Fi), wireless LAN (WLAN), Bluetooth, Internet Protocol (IP) data casting, satellite, mobile ad-hoc network (MANET), and the like, or any combination thereof.

In some example embodiments, the user equipment associated with the vehicle 106, the charging unit 114, and/or the charging point 110 may be any user-accessible device such as a mobile phone, a smartphone, a portable computer, and the like that are portable in themselves or as a part of another portable/mobile object such as a vehicle. In some other embodiments, the user equipment may be stationed at a fixed location. For example, the user equipment associated with the charging unit 114 and/or the charging point 110 may be fixed at or in the vicinity of the charging unit 114 and/or the charging point 110. The user equipment may comprise a processor, a memory, and a communication interface. The processor, the memory, and the communication interface may be communicatively coupled with each other. In some example embodiments, the user equipment may be associated, coupled, or otherwise integrated with a vehicle, such as an advanced driver assistance system (ADAS), a personal navigation device (PND), a portable navigation device, an infotainment system and/or other device that may be configured to provide route guidance and navigation-related functions to the user. In such example embodiments, the user equipment may comprise processing means such as a central processing unit (CPU), storage means such as on-board read-only memory (ROM) and random access memory (RAM), acoustic sensors such as a microphone array, position sensors such as a GPS sensor, gyroscope, a LIDAR sensor, a proximity sensor, motion sensors such as accelerometer, temperature sensors, voltage sensors, current sensors, display enabled user interfaces such as a touch screen display, and other components as may be required for specific functionalities of the user equipment. For example, the user equipment may be configured to execute and run mobile applications such as a messaging application, a browser application, a navigation application, and the like.

According to some embodiments, the user equipment associated with the vehicle 106 (also referred to as visitor user equipment) may interface with one or more sensors of the vehicle 106 and provide various types of sensor data to the assessment platform 102 for processing. Additionally, the visitor user equipment may also interface with the vehicle database 108 to provide data pertaining to the vehicle 106 and the user of the vehicle 106 (also referred to as visitor user) to the assessment platform 102 for further processing. In some embodiments, the user equipment associated with the charging unit 114 and/or the charging point 110 (also referred to as a host user equipment) may interface with one or more sensors to collect sensor data pertaining to the charging unit 114 and/or the charging point 110 to the assessment platform 102 for processing. Additionally, the host user equipment may also interface with the charging point database 112 and the charging unit database 116 to provide data pertaining to the user associated with the charging point 110 (also referred to as the host user) to the assessment platform 102 for further processing. Further, the assessment platform 102 may be communicatively coupled with the charging point database 112 and the charging unit database 116 to collect data regarding one or more charging points such as the charging point 110 and the charging unit 114.

The vehicle database 108 may store data including user data regarding one or more users of EVs (also referred to as visitor users) and vehicle data regarding one or more EVs. The user data may include without limitation: personal information of the visitor users associated with vehicles, one or more identifiers of each of the visitor users, one or more mobility graphs associated with each of the visitor users, and the like. The mobility graph of a visitor user may be a data representation of movement patterns of the visitor user defined with reference to a suitable timescale. For example, the mobility graph of the visitor user may represent a predicted timeline of the visitor user in terms of mobility events, locations, and activities that are defined relative to time. As an example, one entry of the mobility graph may indicate that the visitor user leaves for the gym from home at 8:00 AM, reaches the gym around 8:15 AM, leaves for home from the gym at 9:30 AM, and so on. Additionally, or optionally, the mobility graph may also indicate the travel modes for each commute. The mobility graph may be compiled using historical location data of the visitor user, historical input data provided by the visitor user, historical activity data of the visitor user, historical and future calendars and schedules of the visitor user, historical connection port data, and the like.

The vehicle data stored by the vehicle database 108 may include one or more identifiers of one or more vehicles, a brand of each of the vehicles, a model of each of the vehicles, year of manufacture of the vehicles, battery capacity of the vehicles, battery data of each of the vehicles, charging requirements of the vehicles, cable or connector type compatible with the vehicles, dimensions of the vehicles, unloaded weight of the vehicles, regulatory information associated with the vehicles, and the like.

The charging point database 112 may store charging point data regarding one or more charging points such as the charging point 110. The charging point data of the charging point 110 may include one or more identifiers of the charging point 110 (e.g., EVSEID), a brand or make of the charging point 110, a model of the charging point 110, number of ports of the charging point 110, current, voltage, and power supply capacity of the charging point 110, availability status of fast charging at the charging point 110, charging technology used by the charging point 110, cable or connector type provided at the charging point 110, cable or connector availability schedule at the charging point 110, dimensions of the cable or connector of the charging point 110, regulatory information associated with the charging point 110, handling instructions for one or more equipment at the charging point 110, per unit cost of charging at the charging point 110, payment modes acceptable at the charging point 110, and the like. The one or more identifiers of a charging point may include an equipment identifier assigned to the charging point, a location identifier assigned to the charging point, and the like.

The charging unit database 116 may store data regarding one or more charging units. In some embodiments, the charging unit database 116 may be a part of the charging point database 112 or may be co-located with it. In alternate embodiments, the charging unit database 116 may be distinct and separate from the charging point database 112. The charging unit data may include without limitation: electrical specifications of the one or more charging units, one or more identifiers of the one or more charging units, one or more charging points linked to the one or more charging units, compatible vehicle models for each charging unit of the one or more charging units, usage data of each charging unit of the one or more charging units, and the like.

In operation, the assessment platform 102 may be configured to train one or more machine learning models to predict missing or unknown specification data of one or more charging units. Towards this end, although not shown in FIG. 1, the one or more machine learning models may be stored in a memory that is part of the assessment platform 102 or is operatively coupled to the assessment platform 102. The assessment platform 102 may fetch training data from one or more sources such as the databases 108, 112, and 116, and sensors coupled with one or more vehicles and one or more charging units.

The training data may be associated with the one or more charging units, the one or more charging points, the one or more vehicles, and/or one or more users associated with the one or more vehicles. The training data may include specification data associated with one or more charging units and charging event data pertaining to one or more charging events associated with the corresponding charging unit of the one or more charging units. For example, the charging event data pertaining to a charging event may include one or a combination of a charging duration of the charging event, a start time stamp associated with the charging event, an end time stamp associated with the charging event, a type, model, and/or make of a vehicle associated with the charging event. According to some embodiments, the training data may include vehicle distance travel (VDT) data of a road link associated with each charging unit of the one or more charging units. The VDT of a road link may indicate the distance traveled by vehicles on the road link during a period. In some embodiments, the VDT of a road link may be compiled on an hourly basis and the highest value captured within an hour may be considered as the value for that hour in the VDT. In some embodiments, a road link associated with a charging unit is a road link that is the closest to the location of the charging unit. According to some embodiments, the training data may include trip data associated with each charging unit of the one or more charging units. The location at which a charging unit is used may be a part of one or more trips taken by vehicles that visit the location of the charging unit for charging. As such, the trip data may be segregated as origin-distance (O-D) product features that include origin coordinates and destination coordinates of each trip, pitstops in between each trip, time delay and distance between the start of each trip and stoppage by the corresponding vehicle associated with the trip for charging, number of charging point visits made in each trip, points of interest visited during each trip, leisure time spent during each trip, distance traveled after each charging event during the trip, number of occupants in the vehicle associated with each trip, age of the occupants in the vehicle associated with each trip, demography of each occupant of the vehicle associated with each trip, environmental conditions during each trip (e.g., temperature and humidity), and the like.

In some embodiments, the charging event data, the VDT data, and the trip data may be stored in one or more suitable storages such as the charging point database 112, the charging unit database 116, or, at least in part the vehicle database 108. Additionally, or alternately, in some embodiments, the training data may be stored in one or more databases different from one or more of the databases 108, 112, or 116. The assessment platform 102 may retrieve the training data from the corresponding storage and execute one or more training processes for the one or more machine learning models to train them for predicting specification data related to one or more charging units. In this regard, the training data may be available at a charging unit level (i.e., the training data is defined as corresponding to each charging unit available to the assessment platform 102). For example, the charging event data may defined for each charging unit, where the data may indicate information such as the start status of the battery at the start of the charging event, the end status of the battery at the completion of the charging event, the start time stamp of the charging event, the end time stamp of the charging event, the location at which the charging event occurs, type and model of the vehicle charged using the charging unit during the charging event, the distance traveled by the vehicle after the charging event and before stopping the vehicle for more than a threshold time duration, the distance traveled by the vehicle after the charging event and before a next charging of the vehicle, and the like. In some embodiments, the training data may include application interaction data associated with a charging unit. In such embodiments, the application interaction data indicate user interactions such as how long a user has spent on the screen to look for the charging unit, the number of zoom-in/zoom-out performed during the search for the charging unit, the number of charging points visited in the application during the search for a charging unit, identifiers of charging units visited in the application during a search for the charging unit, and the like. Still further, in some embodiments, the training data may include user feedback data provided by users of vehicles that visit the charging points for charging their vehicles. In some embodiments, the charging event data may also include activity data related to one or more activities undertaken by a user of the vehicle that is charged during the charging event. Still further, in some embodiments, the training data may include one or more mobility graphs of a user that indicate charging points frequently visited by a user of the vehicle, the time spent at each charging point of the charging points frequently visited by the user of the vehicle, and the like.

According to some embodiments, the specification data of a charging unit may include connector specification which includes without limitation, one or more of a connector standard associated with the charging unit, a connector power associated with the charging unit, a connector voltage associated with the charging unit, a length of the connector associated with the charging unit, a maximum current of a connector associated with the charging unit, pin type of the connector associated with the charging unit, current type provided by the connector associated with the charging unit, or a combination thereof. Additionally, or alternately, in some embodiments, the specification data of the charging unit may include data defining the availability and compatibility of the connector associated with the charging unit with respect to a given vehicle. Such data may indicate, without limitation, one or more of the vehicle models compatible with the connector associated with the charging unit, vehicle models incompatible with the connector associated with the charging unit, battery models compatible with the connector associated with the charging unit, battery models incompatible with the connector associated with the charging unit, one or more time slots defining availability of the connector associated with the charging unit, one or more time slots defining the non-availability of the connector associated with the charging unit, compatibility data of the charging point associated with the charging unit, or a combination thereof. Additionally, or alternately, in some embodiments, the specification data of the charging unit may include ancillary data such as a probability of two or more specifications being available in combination at the connector associated with the charging unit, a possible reason for early unplug by vehicles at a charging point associated with the charging unit, operational status of a connector associated with the charging unit during a time period, possible activities that can be undertaken by a visitor user at a location associated with the charging unit during charging, or a combination thereof.

According to some embodiments, the assessment platform 102 may train one machine learning model for predicting a particular category of specification data of one or more charging unit. Alternately, the assessment platform 102 may train a machine learning model for predicting a plurality of categories of the specification data of one or more charging unit. The training may be carried out in a supervised manner or a self-supervised manner using ground truth data related to the feature being predicted. For example, the assessment platform 102 may train a first machine learning model to predict the connector specification of a charging unit, and/or data defining the compatibility and availability of the connector associated with the charging unit, and/or ancillary data related to the charging unit, the charging point associated with the charging unit, or a given vehicle. Similarly, a second machine learning model may be trained for predicting non-availability of a connector specification of the charging unit. Likewise, a third machine learning model may be trained to predict the compatibility of the connector specification with a given vehicle. In some embodiments, instead of the assessment platform 102, the training of one or more models of the one or more machine learning models may be carried out by a different entity.

The assessment platform 102 may utilize the one or more trained machine learning models to generate the specification data of one or more charging unit. In this regard, the trained machine learning models may be stored by the assessment platform 102 or may be invoked by the assessment platform 102 from an external storage. The assessment platform 102 may submit input data related to a candidate charging unit and cause the one or more trained machine learning models to predict the specification data of the candidate charging unit based on the input data. In this regard, the input data may include without limitation, an identifier of the candidate charging unit, a location of the candidate charging unit, a point of interest associated with the candidate charging unit, desired charging requirement from the candidate charging unit, a vehicle type to be charged using the candidate charging unit or a model of the vehicle to be charged using the candidate charging unit.

The assessment platform 102 may utilize the predicted specification data for executing one or more control actions. For example, the assessment platform 102 may generate a vehicle navigation function for the given vehicle based on the predicted specification data. In some cases, the assessment platform 102 may accumulate the predicted specification data of multiple charging units and generate a mobility plan for the vehicle based on the predicted specification data of the multiple charging units. In some embodiments, the assessment platform 102 may reconfigure a route to a destination based on real-time prediction of the specification data such that the reconfigured route caters to the real-time charging requirements of a given vehicle. In some embodiments, the assessment platform 102 may generate the specification data of one or more charging units automatically or on-demand. Still further, in some embodiments, the assessment platform 102 may control one or more autonomous functions of the given vehicle based on the predicted specification data. The navigation functions may include cruise control of the vehicle, drive control of the vehicle, heating, ventilation, and air-conditioning control of the vehicle, and the like.

Thus, the assessment platform 102 provides avenues for efficient mobility planning of EVs at the visitor end in such a manner that reduces range anxiety and improves the operating range of the vehicle without the requirement of any additional resources in the vehicle. The assessment platform 102 also leads to an optimized utilization of the charging points/charging units in a manner that reduces malfunctioning, underutilization, and overutilization of the charging points/charging units. Thus, the assessment platform 102 steers technical improvements and advancements in the field of electric vehicle mobility and charging and improves the usage and adoption of EVs for commute and transportation.

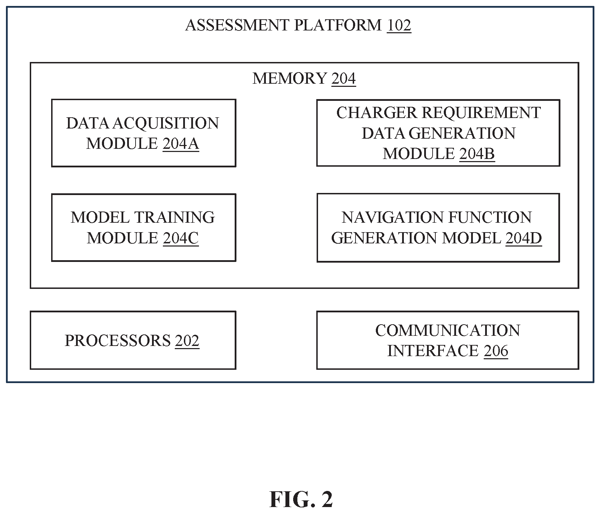

FIG. 2 illustrates components of the assessment platform 102 for generating specification data of one or more charging units, in accordance with one or more example embodiments. FIG. 2 will be described in conjunction with FIG. 1. The assessment platform 102 may include one or more processors 202, a memory 204, and a communication interface 206. The memory 204 stores computer-executable programs and data utilized for implementing various functions such as the generation of specification data of one or more charging units or the mobility planning of EVs. For example, the memory 204 may store various software modules for executing a method for generating specification data of one or more charging units. According to some embodiments, the modules stored in the memory may include without limitation, a data acquisition module 204A, a charger requirement data generation module 204B, a model training module 204C, and a navigation function generation module 204D. According to some embodiments, the assessment platform 102 may further include other components, not shown in FIG. 2 for the sake of brevity, such as a database update module, a data output unit for rendering output data, a power supply unit, and the like. In some embodiments, the memory 204 may also store one or more machine learning models utilized by the assessment platform 102.

In some embodiments, the data acquisition module 204A may be executed by the one or more processors 202 to obtain data for carrying out various operations. For example, where the assessment platform 102 is utilized for training the one or more machine learning models, the one or more processors 202 may execute the data acquisition module 204A to obtain or retrieve the training data from one or more suitable repositories. Additionally, or alternately, where the assessment platform 102 is utilized for generating the specification data of a candidate charging unit, the one or more processors 202 may execute the data acquisition module 204A to obtain input data related to the candidate charging unit or a given vehicle from a suitable source such as a storage or one or more sensors. Additionally, or optionally, where the assessment platform 102 is utilized for generating a navigation function for a given vehicle, the one or more processors 202 may execute the data acquisition module 204A to obtain map data of a geographic region associated with the given vehicle or the candidate charging unit.

The one or more processors 202 may execute the charger requirement data generation module 204B to generate the charger requirement data of the given vehicle based on the charging data of the vehicle. The charger requirement data of a vehicle may define the requirements for charging the vehicle (i.e., charging the on-board power storage). For example, the charger requirement data may indicate the amount of electrical power required for charging the vehicle, a current type (AC/DC) for the vehicle, the charging voltage required for charging the vehicle, a desired charging speed (fast/slow) for the vehicle, and the like. In this regard, the assessment platform 102 may obtain charging data associated with the vehicle. The charging data associated with the vehicle may indicate one or a combination of a current battery level/charge level of at least one onboard battery associated with the vehicle, a desired final battery/charge level of the at least one onboard battery, a total power storage capacity of the at least one onboard battery, a rated charging current of the at least one onboard battery, a rated charging voltage of the at least one onboard battery, a rated speed of charging the at least one onboard battery, a desired connector type for the at least one onboard battery, a current temperature of the at least one onboard battery, a maximum temperature for the at least one onboard battery, or a combination thereof. The assessment platform 102 may obtain the charging data of the vehicle via the communication interface 206 from one or more sensors coupled to the vehicle, from a data storage such as the vehicle database 108 of FIG. 1, and/or from user equipment associated with the user of the vehicle. The assessment platform 102 may determine the charger requirement data by considering the various parameters and factors defined by the charging data of the vehicle.

As an example, consider the amount of charge required as the charging requirement data. A visitor user may want to explore the possibility of charging a vehicle at the target location which can be a familiar place for the visitor user. The visitor user may specify the target location and the desired charge level at the target location (for example, expressed as battery percentage or KWh or in terms of distance range of the vehicle) with which the user may want to depart from the target location. In such embodiments, the charger requirement data generation module 204B may compute the total electrical power required to depart from the target location, starting from the current location of the vehicle, and the current charge level of the vehicle's battery. The total electrical power required may be computed as a sum of the power required to reach the target location from the current location and the amount of power required for charging the battery to reach the desired charge level at the target location.

According to some other embodiments, the visitor user may want to commute between a source location and a destination location using the electrical vehicle. Thus, when the assessment platform 102 is implemented for navigation purposes, the charger requirement data generation module 204B may compute the amount of electrical power required for reaching a destination. In such embodiments, the assessment platform 102 may invoke the charger requirement data generation module 204B to compute the amount of electrical power required to reach the destination from the current location of the vehicle via the source location. In some embodiments, the current location may be the same as the source location and as such the charger requirement data generation module 204B may compute the amount of electrical power required to reach the destination from the current location of the vehicle.

In some embodiments, the charger requirement data generation module 204B may specify the charging requirements of the vehicle. For example, when the total electrical power required is less than the current power level stored in the battery of the vehicle, the charger requirement data generation module 204B may output a null value indicative of no requirement for intermediate charging of the vehicle. However, where the total electrical power required is more than or equal to the current power level stored in the battery of the vehicle, the charger requirement data generation module 204B may output an amount of charging required for the vehicle as the difference of the total electrical power required and the current power level stored in the battery of the vehicle. The amount of charging required itself may be indicative of a requirement for intermediate charging of the vehicle. According to some embodiments, if the amount of charging required is more than the total power storage capacity of the vehicle, the charger requirement data generation module 204B may output a message indicating the requirement for multiple intermediate charging sessions for the vehicle during the commute to the target location.

According to some embodiments, the assessment platform 102 may be configured to train one or more machine learning models for predicting the specification data of a charging unit. In this regard, the one or more processors 202 may execute the model training module 204C to train the one or more machine learning models using the training data acquired by the data acquisition module. The training may be carried out in the manner described previously with respect to FIG. 1. According to some embodiments, the one or more processors 202 may execute the model training module 204C to train each model for the prediction of a different type of the specification data of the charging unit.

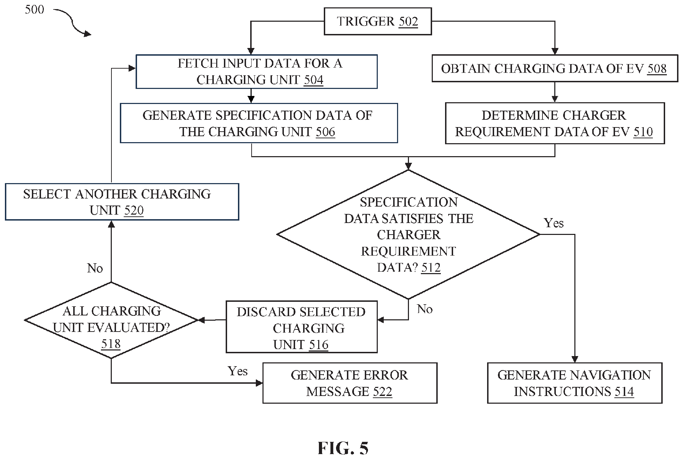

According to some embodiments, the assessment platform 102 may be configured for generating navigation functions for a vehicle using the specification data of a charging unit. In this regard, the one or more processors 202 may execute the navigation function generation module 204D to generate one or more navigation functions for the vehicle, details of which are described in detail later with reference to FIG. 5.

According to some embodiments, the memory 204 may also store other programs such as a vehicle control program to control one or more functionalities of the vehicle associated with a visitor user. As such, in some embodiments the one or more processors 202 may execute such a control program and control the one or more functionalities of the vehicle in accordance with the output generated by one or more modules of the assessment platform 102.

Referring to FIG. 2, the one or more processors 202 may be embodied in a number of different ways. For example, the one or more processors 202 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application-specific integrated circuit), an FPGA (field programmable gate array), a microcontroller unit (MCU), a hardware accelerator, a special-purpose computer chip, or the like. As such, in some embodiments, the one or more processors 202 may include one or more processing cores configured to perform independently. A multi-core processor may enable multiprocessing within a single physical package. Additionally, or alternatively, the one or more processors 202 may include one or more processors configured in tandem via the bus to enable independent execution of instructions, pipelining, and/or multithreading.

Additionally, or alternatively, the one or more processors 202 may include one or more processors capable of processing large volumes of workloads and operations to provide support for big data analysis. In an example embodiment, the one or more processors 202 may be in communication with the memory 204 via a bus. The memory 204 may be non-transitory and may include, for example, one or more volatile and/or non-volatile memories. In other words, for example, the memory 204 may be an electronic storage device (for example, a computer readable storage medium) comprising gates configured to store data (for example, bits) that may be retrievable by a machine (for example, a computing device like the one or more processors 202). The memory 204 may be configured to store information, data, content, applications, instructions, or the like, for enabling the assessment platform 102 to carry out various functions in accordance with an example embodiment of the present disclosure. For example, the memory 204 may be configured to buffer input data for processing by the one or more processors 202.

As exemplarily illustrated in FIG. 2, the memory 204 may be configured to store instructions for execution by the one or more processors 202. As such, whether configured by hardware or software methods, or by a combination thereof, the one or more processors 202 may represent an entity (for example, physically embodied in circuitry) capable of performing operations according to an embodiment of the present disclosure. Thus, for example, when the one or more processors 202 is embodied as an ASIC, FPGA, or the like, the one or more processors 202 may be specifically configured hardware for conducting the operations described herein. Alternatively, as another example, when the one or more processors 202 is embodied as an executor of software instructions, the instructions may specifically configure the one or more processors 202 to perform the algorithms and/or operations described herein when the instructions are executed. However, in some cases, the one or more processors 202 may be a processor specific device (for example, a mobile terminal or a fixed computing device) configured to employ an embodiment of the present disclosure by further configuration of the one or more processors 202 by instructions for performing the algorithms and/or operations described herein. The one or more processors 202 may include, among other things, a clock, an arithmetic logic unit (ALU), and logic gates configured to support the operation of the one or more processors 202.

In some embodiments, the one or more processors 202 may be configured to provide Internet-of-Things (IoT) related capabilities to a user of the assessment platform 102, where the user may be a traveler, a driver of the vehicle, and the like. In some embodiments, the user may be or correspond to an autonomous or semi-autonomous vehicle. The IoT-related capabilities may in turn be used to provide smart navigation solutions by providing real-time updates to the user to make proactive decisions on lane maintenance, speed determination, lane-level speed determination, turn-maneuvers, lane changes, overtaking, merging, and the like. The assessment platform 102 may be accessed using the communication interface 206. The communication interface 206 may provide an interface for accessing various features and data stored in the assessment platform 102. For example, the communication interface 206 may comprise an I/O interface which may be in the form of a GUI, a touch interface, a voice-enabled interface, a keypad, and the like. For example, the communication interface 206 may be a touch-enabled interface of a navigation device installed in a vehicle, which may also display various navigation-related data to the user of the vehicle.

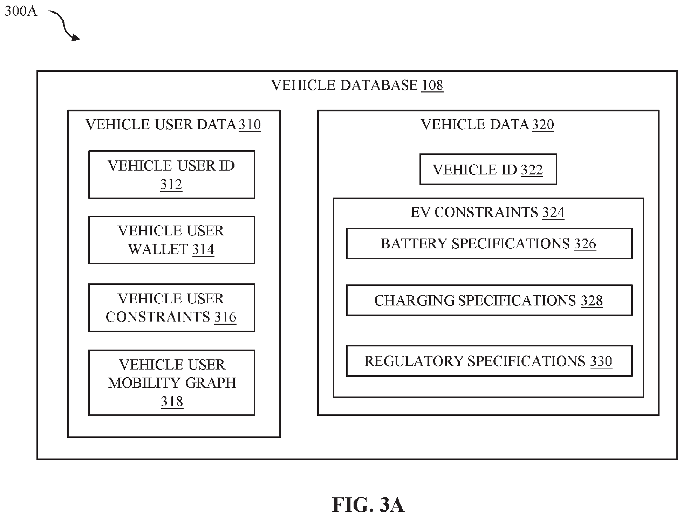

FIG. 3A illustrates a block diagram 300A showing an exemplary format of data stored in the vehicle database 108 utilized by the assessment platform 102 shown in FIG. 1, in accordance with one or more example embodiments. The vehicle database 108 may store vehicle user data 310 regarding one or more users of electric vehicles (also referred to as visitor users) and vehicle data 320 regarding one or more EVs. The vehicle user data 310 of a visitor user may include a vehicle user identifier 312, a vehicle user wallet 314, one or more vehicle user constraints 316 associated with the visitor user, and a vehicle user mobility graph 318 of the visitor user. Additionally, the vehicle user data 310 may also include the personal information of the visitor user. The vehicle user identifier 312 may be provided or collected through a user interface of user equipment associated with the corresponding user. The vehicle user identifier 312 may be used by the assessment platform 102 to identify a visitor user. The vehicle user wallet 314 may be a digital financial wallet linked with the visitor user and may be used to pay for the charging of electric vehicles at charging locations. According to some embodiments, the assessment platform 102 may automatically debit the cost of charging a vehicle during a charging session from the wallet 314 and pay to an intended host user wallet. The one or more vehicle user constraints 316 may include user-defined preferences related to the charging of the electric vehicle. For example, the one or more vehicle user constraints 316 may include a time constraint defining the maximum waiting time at any charging station, another time constraint defining the maximum total time taken for a charging session, a requirement for a waiting area at the charging station, and the like. The vehicle user mobility graph 318 of a visitor user may be a data representation of movement patterns of the visitor user defined with reference to a suitable timescale.

The vehicle data 320 may include one or more identifiers 322 of the vehicle associated with the visitor user and a plurality of electric vehicle constraints 324 such as battery specifications 326, charging specifications 328, and regulatory specifications 330. The battery specifications 326 may include battery type (Li-ion, Li-polymers, lead acid, nickel-hydrogen, etc.), battery make, model, month and year of manufacture, lifespan of the battery, operating temperature range of the battery, power storage capacity of the battery, and the like. The charging specifications 328 of the battery may include charging requirements of the EV expressed in terms of charging voltage and rated current, charging cable or connector type of battery of the EV, and the like. The regulatory specifications 330 may include information such as local regulations, federal regulations, national regulations, insurance-related regulations, and safety regulations associated with the vehicle and its operation and use. Additionally, vehicle data 320 may also include vehicle specifications such as dimensions of the electric vehicle, unloaded weight of the EV, the brand of the electric vehicle, the model of the EV, and the year of manufacture of the EV.

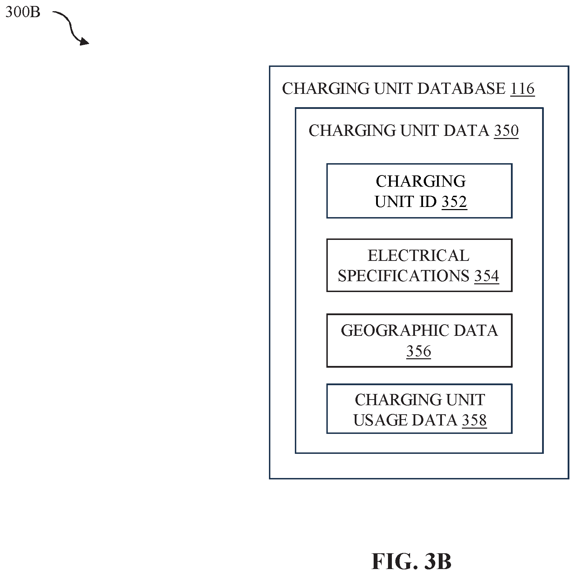

FIG. 3B illustrates a block diagram showing a format of data stored in the charging unit database 116 utilized by the assessment platform 102 shown in FIG. 1, in accordance with one or more example embodiments. The charging unit database 116 may store charging unit data 350 for each charging unit of a plurality of charging units. The charging unit data 350 of a charging unit may include a charging unit identifier 352, electrical specifications 354 of the charging unit, geographic data 356 associated with the charging unit, and charging unit usage data 358 of the charging unit. Additionally, the charging unit data 350 of a charging unit may also include physical attributes and information about the charging unit.

The charging unit identifier 352 of a charging unit may be any identifier that uniquely identifies the charging unit in the database 116. The electrical specifications 354 of a charging unit may include one or more electrical parameters associated with the charging unit such as the maximum rated charging current for the charging unit, the maximum rated charging voltage for the charging unit, the maximum tolerable environmental conditions for the charging unit, a per unit length resistance of the charging unit, a per unit length weight of the charging unit, and the like. The geographic data 356 of a charging unit may include a location associated with the charging unit, a locality associated with the charging unit, one or more points of interest associated with the charging unit, a road link associated with the charging unit, and the like.

The charging unit usage data 358 of a charging unit may include historical usage data regarding the charging unit. For example, the charging unit usage data 358 of a charging unit may define charging events associated with the charging unit for a time period. Each charging event associated with the charging unit may be defined in terms of data that includes one or a combination of a charging duration of the charging event, a start time stamp associated with the charging event, an end time stamp associated with the charging event, a type, model, and/or make of a vehicle associated with the charging event, start status of battery at the start of the charging event, end status of the battery at the completion of the charging event, the location at which the charging event occurs, and the like.

Additionally, or alternately, in some embodiments, the charging unit usage data 358 of a charging unit may include VDT data of a road link associated with the charging unit. The vehicle travel data of a road link may indicate the distance traveled by vehicles on the road link during a time period. In some embodiments, the VDT of a road link may be compiled on an hourly basis and the highest value captured within an hour may be considered as the value for that hour in the VDT.

Additionally, or alternately, in some embodiments, the charging unit usage data 358 of a charging unit may include trip data associated with the charging unit. The trip data may be segregated as O-D product features that include origin coordinates and destination coordinates of each trip, stops during each trip, time delay and distance between the start of each trip and stoppage by the corresponding vehicle associated with the trip for charging, number of charging point visits made in each trip, points of interest visited during each trip, leisure time spent during each trip, distance traveled after each charging event during the trip, number of occupants in the vehicle associated with each trip, age of the occupants in the vehicle associated with each trip, demography of each occupant of the vehicle associated with each trip, environmental conditions during each trip, and the like.

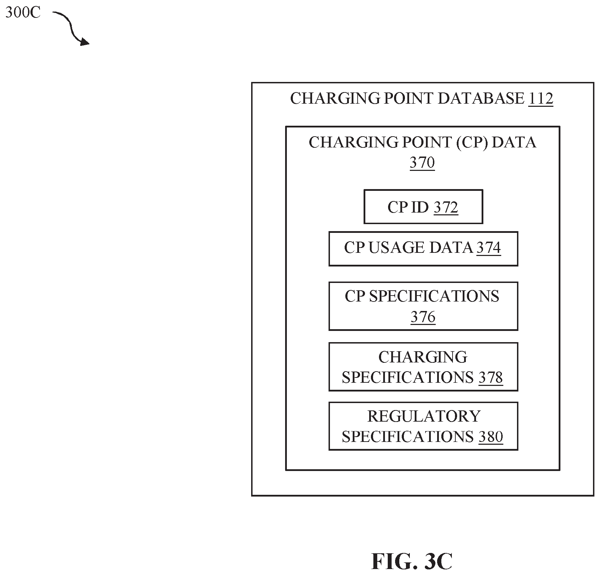

FIG. 3C illustrates a block diagram showing a format of data stored in the charging point (CP) database 112 utilized by the assessment platform 102 shown in FIG. 1, in accordance with one or more example embodiments. The CP database 112 may store charging point data 370 (CP data 370) associated with each charging point of a plurality of charging points. The CP data 370 of a charging point may include one or more identifiers 372 of the charging point, charging point usage data 374 associated with the charging point, charging point specifications 376 associated with the charging point, charging specification 378 associated with the charging point, and regulatory specifications 380 associated with the charging point. Additionally, in some embodiments, the CP data 370 of a charging point may include the brand or make of the charging point, the model of the charging point, number of ports of the charging point, current, voltage, and power supply capacity of the charging point, availability status of fast charging at the charging point, charging technology used by the charging point, cable or connector type provided at the charging point, cable or connector availability schedule at the charging point, dimensions of the cable or connector of the charging point, regulatory information associated with the charging point, handling instructions for one or more equipment at the charging point, per unit cost of charging at the charging point, payment modes acceptable at the charging point, and the like.

The charging point identifier 372 of a charging point may be any identifier that uniquely identifies the charging point in the database 112. The charging point usage data 374 may include historical usage data regarding the charging point. The charging point usage data 374 may be defined at the charging point level (i.e., for each charging point) or charging unit level (i.e., for each charging unit associated with the charging point). For example, the charging point usage data 374 of a charging point may define charging events associated with each charging unit provided at the charging point for a time period. Each charging event associated with a charging unit may be defined in terms of charging event data, details of which have been described with respect to the charging unit usage data 358 of FIG. 3B. Alternately, where the charging point usage data 374 is defined at the charging point level, the charging point usage data 374 of a charging point may include charging event data pertaining to one or more charging events that occurred during a time period. The charging event data may include without limitation, one or a combination of a charging duration of the charging event, a start time stamp associated with the charging event, an end time stamp associated with the charging event, a type, model, and/or make of a vehicle associated with the charging event, start status of battery at the start of the charging event, end status of the battery at the completion of the charging event, the location at which the charging event occurs, and the like.

Additionally, or alternately, in some embodiments, the charging point usage data 374 of a charging point may include VDT data of a road link associated with the charging point. The vehicle travel data of a road link may indicate the distance traveled by vehicles on the road link during a time period. In some embodiments, the VDT of a road link may be compiled on an hourly basis and the highest value captured within an hour may be considered as the value for that hour in the VDT.

Additionally, or alternately, in some embodiments, the charging point usage data 374 of a charging point may include trip data associated with the one or more vehicles charged at the charging point. The trip data may be segregated as O-D product features that include origin coordinates and destination coordinates of each trip, stops during each trip, time delay and distance between the start of each trip and stoppage for charging by the corresponding vehicle associated with the trip, number of charging point visits made in each trip, points of interest visited during each trip, leisure time spent during each trip, distance traveled after each charging event during the trip, number of occupants in the vehicle associated with each trip, age of the occupants in the vehicle associated with each trip, demography of each occupant of the vehicle associated with each trip, environmental conditions during each trip, and the like.

The charging point specifications 376 of a charging point may include charger type (fast/normal), charger make, model, month and year of manufacture, operating temperature range of the charger, power supply capacity of the charger, maximum charging current, and the like. The charging specifications 378 of a charging point may include charging voltage and rated current, charging cable or connector type available with the charging station, and the like. The regulatory specifications 380 of a charging point may include information such as local regulations, federal regulations, national regulations, insurance-related regulations, and safety regulations associated with the charging station and its operation and use.

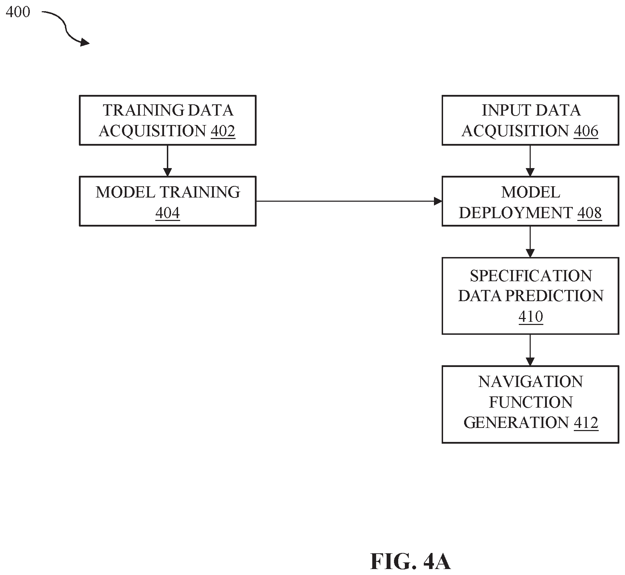

FIG. 4A illustrates a framework 400 for generating a navigation function based on specification data of one or more charging units, in accordance with one or more example embodiments. The framework 400 comprises operations for training data acquisition 402, model training 404, input data acquisition 406, model deployment 408, specification data prediction 410, and navigation function generation 412. The framework 400 may be implemented through computer executable instructions that are executed by a computer.

The operations for training data acquisition 402 comprise retrieving training data from one or more sources such as databases or sensors. The training data may be associated with the one or more charging units, one or more charging points, one or more vehicles, one or more users associated with the one or more vehicles, or a combination thereof. According to some embodiments, the training data includes specification data associated with one or more charging units and charging event data pertaining to one or more charging events associated with a corresponding charging unit of the one or more charging units. According to some embodiments, the training data may include VDT data of a road link associated with each charging unit of the one or more charging units or with each charging point of the one or more charging points. According to some embodiments, the training data may include trip data associated with each charging unit of the one or more charging units or with each charging point of the one or more charging points. In some embodiments, the training data may include application interaction data indicating conditions such as how long a user has spent on the screen to look for charging unit, the number of zoom-in/zoom-out performed during the search for a charging unit, the number of charging points visited in the app during the search for a charging unit, the identifiers of the charging points visited in the app during the search for a charging unit, and the like. Still further, in some embodiments, the training data may include user feedback data provided by users of vehicles that visit the charging units for charging their vehicles.

The operations for model training 404 comprise executing one or more training processes for training one or more machine learning models to predict specification data of one or more types. For example, using the charging event data associated with a charging unit for a time duration, a machine learning model may be trained to predict the type of EV that frequently visits the charging point associated with the charging unit. Thus, the machine learning model learns one or more EV types that are compatible with the given charging unit (associated with the charging event data). Conversely, the machine learning model learns the specifications of the charging unit that are compatible with a particular type of EV. Such a trained machine learning model can then be used to predict the charging unit specifications for a given vehicle type. Similarly, the training data may be used to train another machine learning model to predict the non-availability of one or more charging unit specification at a location associated with a charging unit or at a charging station linked to the charging unit. In some embodiments, the training data may be used to train a machine learning model to predict a probability score indicating a compatibility between a charging unit specification and the charging requirements of a given vehicle. Such probability score prediction may be learned for each charging unit associated with a charging point using the charging event data of that charging point.

Additionally, or alternately, in some embodiments, a machine learning model may be trained to predict the probability of finding a combination of charging unit specifications in one charging unit or at one charging point using charging event data associated with the charging point. Additionally, or alternately, in some embodiments, a machine learning model may be trained to predict a probable reason for an early unplug event using the vehicle trip data and/or the charging event data associated with a charging unit or a charging point linked to the charging unit. In such cases, the model may learn, as the probable reason for the early unplug event, an improper feature with one or more of the charging unit, the vehicle, or the charging point.

Additionally, or alternately, in some embodiments, a machine learning model may be trained to predict an operational status of a charging unit using training data that includes verbal user feedback related to the operating condition of the charging unit. In this regard, a large language model (LLM) or a small language model (SLM) may be used to interpret the verbal user feedback to decipher one or more specifications of the charging unit that are working/not working at a particular time instance. Additionally, or alternately, in some embodiments, a machine learning model may be trained to predict the charging speed available with a charging unit using the training data that includes trip data of a vehicle that gets charged at the charging unit. In such embodiments, features indicating the duration of stay of the vehicle at the location of the charging unit while the vehicle gets charged, one or more activities undertaken by a user of the vehicle at the location of the charging unit while the vehicle gets charged, distance traveled by the vehicle after getting charged at the charging unit and before next stop for a threshold period, duration of a charging event at a next charging unit at which the vehicle gets charged after charging at the current charging unit, and a combination thereof may be used to learn the charging speed available with the charging unit.

Referring to FIG. 4A, the operations for input data acquisition 406 comprise obtaining input data associated with a candidate charging unit. In this regard, the input data may include without limitation, an identifier of the candidate charging unit, a location of the candidate charging unit, a point of interest associated with the candidate charging unit, charging requirement desired from the candidate charging unit, a vehicle type to be charged using the candidate charging unit, a model of the vehicle to be charged using the candidate charging unit, an identifier of a charging point associated with the candidate charging unit, a VDT data of a link associated with the candidate charging unit, trip data associated with the candidate charging unit, application interaction data associated with the candidate charging unit, and the like. According to some embodiments, the input data may be provided by a user through a user equipment or by another application running on a user equipment. Additionally, or alternately, the input data may be fetched from a suitable storage such as one or more databases.

The operations for model deployment 408 comprise submitting the input data to one or more machine learning models trained in the operations for model training 404. In this regard, the trained machine learning models may be stored in the internal memory of a computer system that executes the model deployment operation 408 or may be invoked by such a computer system from an external storage. The operations for specification data prediction 410 include causing the one or more trained machine learning models to predict the specification data for a candidate charging unit based on the input data. The one or more trained machine learning models may predict the type of specification data that they have learned during the training operations. The operations for navigation function generation 412 include generating one or more navigation control instructions for a vehicle based on the predicted specification data of the charging unit. In some cases, the predicted specification data of multiple charging units may be accumulated and a mobility plan for the vehicle may be generated based on the predicted specification data of the multiple charging units. In some embodiments, a route to a destination may be reconfigured based on real-time prediction of the specification data such that the reconfigured route caters to the real-time charging requirements of a given vehicle. Still further, in some embodiments, one or more autonomous functions of the given vehicle may be controlled based on the predicted specification data. The navigation functions may include a cruise control of the vehicle, a drive control of the vehicle, a heating, ventilation, and air-conditioning control of the vehicle, and the like.

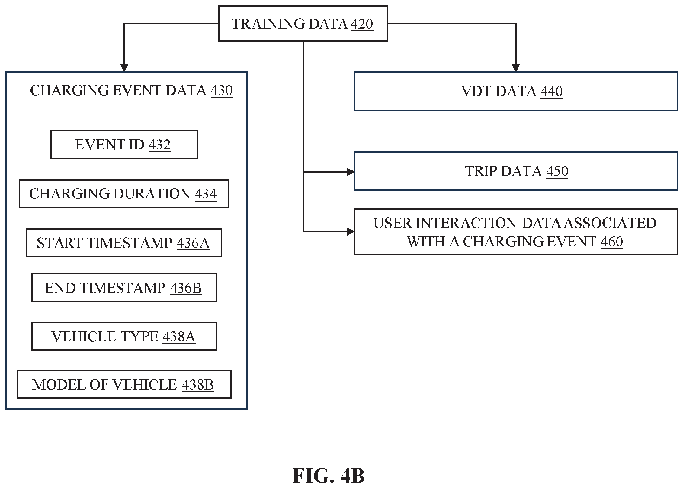

FIG. 4B illustrates some examples of training data 420 used for training one or more machine learning models for predicting charging unit specification data, in accordance with one or more example embodiments. The training data 420 for a charging unit may include charging event data 430 of the charging unit, VDT data 440 of a road link associated with the charging unit, trip data 450 associated with the charging unit, and/or user interaction data 460 associated with the charging unit. The charging event data 430 of the charging unit may be associated with one or more charging events that occur at a location of the charging unit. Examples of the charging event data 430 of a charging unit may include an event ID 432 of the charging event, a charging duration associated with the charging event, a start time stamp 436A associated with the charging event, an end timestamp 436B associated with the charging event, a vehicle type 438A associated with the charging event, and a model of the vehicle 438B associated with the charging event. Detailed description of the charging event data are provided previously in the disclosure with reference to FIG. 1 and FIG. 4A.

The VDT data 440 of a road link associated with a charging unit may indicate the distance traveled by vehicles on the road link during a time period. In some embodiments, the VDT of a road link may be compiled on an hourly basis and the highest value captured within an hour may be considered as the value for that hour in the VDT. The location at which a charging unit is used may be a part of one or more trips taken by vehicles that visit the location of the charging unit for charging. As such, the trip data 450 associated with a charging unit may be segregated as O-D product features that include origin coordinates and destination coordinates of each trip, pitstops in between each trip, time delay and distance between the start of each trip, and stoppage by the corresponding vehicle associated with the trip for charging, number of charging point visits made in each trip, points of interest visited during each trip, leisure time spent during each trip, distance traveled after each charging event during the trip, number of occupants in the vehicle associated with each trip, age of the occupants in the vehicle associated with each trip, demography of each occupant of the vehicle associated with each trip, environmental conditions during each trip, and the like.

The user interaction data 460 associated with a charging unit may also be referred to as application interaction data and indicates conditions such as how long a user has spent on the screen to look for the charging unit, the number of zoom-in/zoom-out performed during the search for a charging unit, the number of charging points visited in the application during the search for the charging unit, the identifiers of the charging points visited in the app during the search for the charging unit, and the like.

According to some embodiments, although not shown in FIG. 4B, the training data 420 may also include user feedback data provided by users of vehicles that visit the charging points for charging their vehicles, activity data related to one or more activities undertaken by a user of the vehicle that is charged during a charging event, mobility graphs of a user that indicate charging points frequently visited by a user of the vehicle, the time spent at each charging point of the charging points frequently visited by the user of the vehicle, and the like.

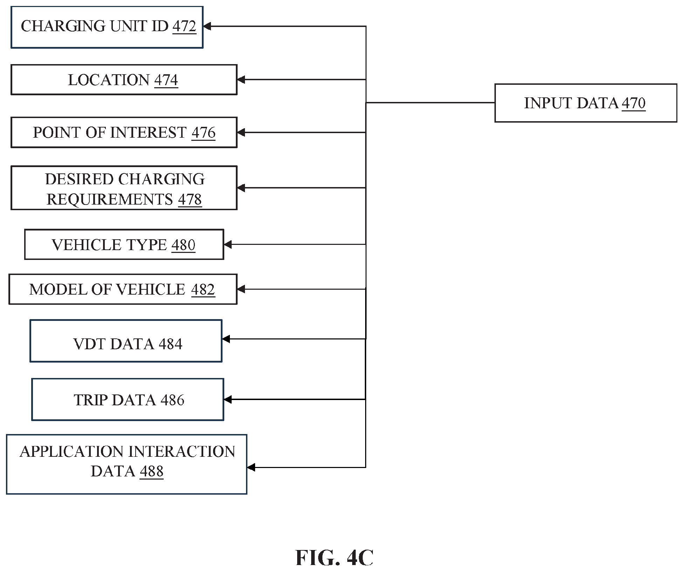

FIG. 4C illustrates some examples of input data 470 used for predicting charging unit specification data, in accordance with one or more example embodiments. The input data 470 may be associated with a candidate charging unit. In this regard, the input data 470 may include without limitation, an identifier 472 of the candidate charging unit, a location 474 of the candidate charging unit, a point of interest 476 associated with the candidate charging unit, desired charging requirements 478 from the candidate charging unit, a vehicle type 480 to be charged using the candidate charging unit, a model 482 of the vehicle to be charged using the candidate charging unit, VDT data 484 of a link associated with the candidate charging unit, trip data 486 associated with the candidate charging unit, application interaction data 488 associated with the candidate charging unit. Additionally, the input data 470 may include an identifier of a charging point associated with the candidate charging unit.

The charging unit identifier 472 of the candidate charging unit may be any identifier that uniquely identifies the candidate charging unit. The location 474 of the candidate charging unit may refer to a pair of geo-coordinates, a geographical area, or a locality associated with the candidate charging unit. The point of interest 476 associated with the candidate charging unit may include locations of interest to users of vehicles. The desired charging requirement 478 from the candidate charging unit may indicate the charging requirements desired by a vehicle from the candidate charging unit.

FIG. 5 illustrates a flowchart of a process 500 for generating navigation instructions based on specification data of one or more charging units, in accordance with one or more example embodiments. FIG. 5 will be described in conjunction with elements from FIG. 1-4C. A trigger condition 502 or simply trigger that invokes the assessment platform 102 to execute the method for generating navigation instructions is provided to kickstart the process 500. According to some embodiments, trigger 502 may be user-generated, or machine-generated and may be provided in a myriad of ways. For example, the trigger 502 may be provided as an input or request from a navigation service provider to the assessment platform 102 to determine one or more available and compatible charging units along a route between a source and a destination. In some other embodiments, the trigger 502 may be provided as an input or request from a device associated with a visitor user to explore the possibility of charging an electric vehicle at a target location such as a friend's house. Irrespective of the manner in which the assessment platform 102 is invoked, the trigger 502 may cause the assessment platform 102 to implement various data collection and processing steps which are described next.

As a part of the data collection steps, the assessment platform 102 may fetch 504 input data for a candidate charging unit and also obtain charging data of an EV designated to charge using the candidate charging unit. The input data may be fetched from a user interface or from one or more data storages in a manner described previously with respect to FIGs. 1, 2, and 4A. The charging data may be obtained using one or more sensors or from a user interface associated with the vehicle in a manner as described previously in reference to FIG. 2.

At 506, the assessment platform 102 generates specification data of the candidate charging unit based on the input data. In this regard, the assessment platform 102 may invoke one or more trained machine learning models to predict the specification data of the candidate charging unit using the input data in a manner as described previously with respect to FIG. 4A. According to some embodiments, the specification data of a charging unit may include connector specification. Additionally, or alternately, in some embodiments, the specification data of the charging unit may include data defining the availability and compatibility of the connector associated with the charging unit with respect to a given vehicle. Additionally, or alternately, in some embodiments, the specification data of the charging unit may include ancillary data such as a probability of two or more specifications being available in combination at the connector associated with the charging unit, a possible reason for early unplug by vehicles at a charging point associated with the charging unit, operational status of a connector associated with the charging unit during a time period, or possible activities that can be undertaken by a visitor user at a location associated with the charging unit during charging.

At 510, the assessment platform 102 determines the charger requirement data of the vehicle using the charging data obtained at step 508. The charger requirement data of a vehicle may define the requirements for charging the vehicle (i.e., charging the onboard power storage). For example, the charger requirement data may indicate the amount of electrical power required for charging the vehicle, the current type (AC/DC) for the vehicle, a charging voltage required for charging the vehicle, a desired charging speed (fast/slow) for the vehicle, and the like. The charger requirement data may be determined in a manner as described previously with reference to FIG. 2. According to some embodiments, the steps 508 and 510 may be carried out by an entity or device other than the assessment platform 102. In such cases, the assessment platform 102 may receive the determined charger requirement data from such an entity or device.

At 512, the assessment platform 102 performs a check to determine whether the specification data generated at step 506 satisfies the charger requirement data. In this regard, the assessment platform 102 may perform an empirical correlation, a stochastic correlation, or a qualitative correlation between the specification data and the charger requirement data. The degree of correlation may be compared against a threshold to ascertain whether the specification data satisfies the charger requirement data.

If the check at 512 yields a yes (i.e., the specification data meets the requirements of the charger requirement data), the control of steps passes to 514 where the assessment platform 102 generates navigation instructions. For example, responsive to the specification data satisfying the charger requirement data, the assessment platform 102 may generate vehicle navigation instructions for a route starting from a source location and terminating at a location associated with the candidate charging unit. Furthermore, the assessment platform 102 may output the vehicle navigation instructions on a user interface or cause the vehicle to traverse at least a portion of the route based on the vehicle navigation instructions.

However, if the check at 512 yields a no (i.e., the specification data does not meet the requirements of the charger requirement data), the control of steps passes to step 516 where the assessment platform 102 discards the charging unit that has been selected as the candidate charging unit. The assessment platform 102 also performs a check at step 518 to determine whether all charging unit have been evaluated or not. In this regard, the assessment platform 102 may query a list of charging units in a buffer memory to check if there is any unevaluated charging unit in the list. If the check at 518 yields a yes (i.e., there remains no charging unit that can be evaluated), it corresponds to a scenario where no suitable charging unit for the vehicle could be found. Accordingly, the assessment platform 102 generates an error message at step 522. However, if the check at 518 yields a no (there remains one or more charging units that can be evaluated), the control of steps passes to step 520 to select another charging unit as the candidate charging unit and the sequence of steps 504-518 is repeated for all the charging unit.

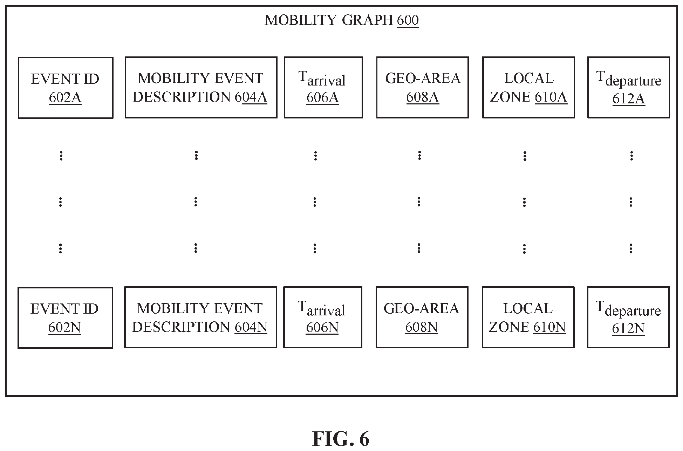

According to some embodiments, the training data, as well as the input data used by the assessment platform 102, may include a mobility graph of a user associated with a vehicle. The mobility graph of a user may be a data representation of movement patterns of the user-defined with reference to a suitable timescale. FIG. 6 shows an example of a mobility graph 600 utilized by the assessment platform 102 of FIG. 1, in accordance with one or more example embodiments. The mobility graph 600 comprises a plurality of movement patterns of a user (visitor or host, as the case may be) where each pattern may be a mobility event that is defined in terms of an event identifier (one among 602A ... 602N), a mobility event description (one among 604A ... 604N), a time of arrival *Tₐᵣᵣᵢᵥₐₗ* (one among 606A ... 606N) associated with the event, a geographical area identifier (one among 608A ... 608N) associated with the event, a local zone identifier (one among 610A ... 610N) associated with the event, and a time of arrival *T_{departure}* (one among 612A ... 612N) associated with the event. According to some embodiments, the mobility event may be defined in terms of fewer or more parameters than illustrated in FIG. 6. As an example, one entry of the mobility graph 600 may indicate that a user stays (mobility event description) at home (local zone) at Randolph Street (Geographical area) from 5:30 PM (*Tₐᵣᵣᵢᵥₐₗ*) on March 25, 2025, till 8:00 AM (*T_{departure}*) on March 26, 2025.

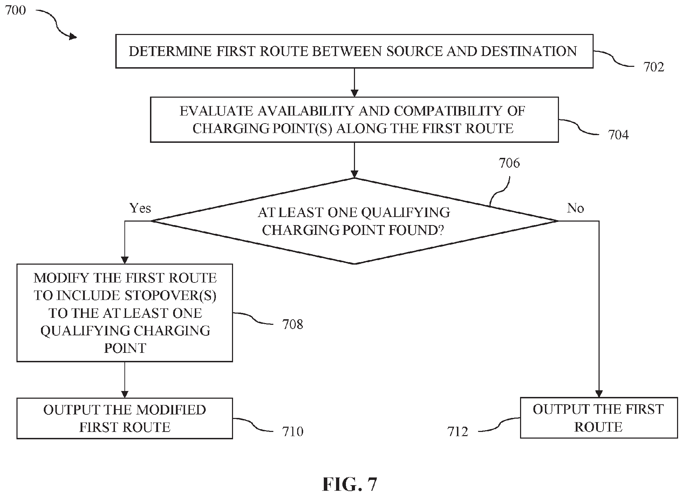

FIG. 7 illustrates a flowchart of a method 700 for planning mobility of a vehicle based on specification data of one or more charging units, in accordance with one or more example embodiments. FIG. 7 will be described in conjunction with FIGs. 1-6. At 702, the assessment platform 102 determines a first route between a source and a destination. In this regard, the assessment platform 102 may obtain map data associated with a region between the source and the destination and determine the first route from the map data. The assessment platform 102 may also obtain one or more charging points along the first route. In this regard, the assessment platform 102 may query the map data of the region between the source and the destination to obtain the one or more charging points that are within a threshold distance from any point on the first route. Additionally, the assessment platform 102 may also perform a connecting link check for each charging point to select only those charging points that have a connecting link from any point on the first route within a threshold connecting distance.

At step 704, the assessment platform 102 may evaluate the availability and compatibility of each charging point of the obtained one or more charging points. In this regard, the assessment platform 102 may generate the specification data of each charging unit associated with a charging point and perform a comparison to check whether the specification data satisfies the charger requirement data of the vehicle. The evaluation of availability and compatibility of each charging point of the obtained one or more charging points with respect to the vehicle may be performed in the manner described previously with respect to steps 504-512 of FIG. 5.

At step 706, the assessment platform 102 performs a check to determine whether at least one qualifying charging point is found along the first route. The charging points that pass the evaluation at step 704 may be considered the qualifying charging points. If the check at step 706 returns a yes (i.e., at least one qualifying charging point is found), the assessment platform 102 proceeds to step 708 to modify the first route to include stopover(s) to at least one of the qualifying charging points. The assessment platform 102 may also output such a modified route at step 710.

However, if the check at step 706 returns a no (i.e., no qualifying charging point is found), the assessment platform 102 proceeds to step 712 to output the first route.

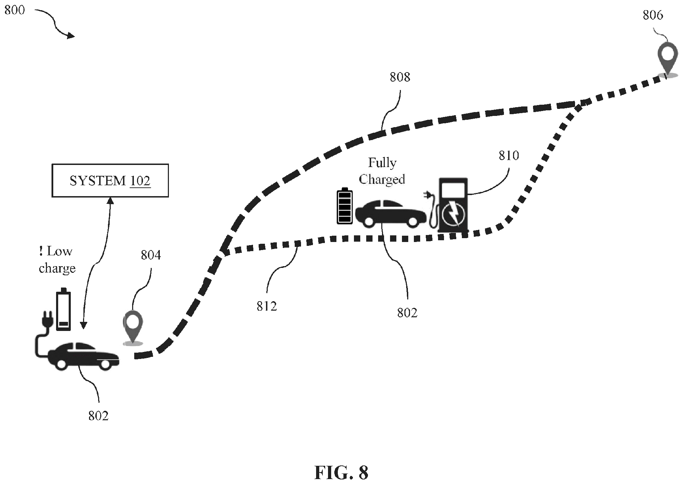

FIG. 8 illustrates an exemplary use case scenario 800 for implementing the method 700 of FIG. 7 in accordance with one or more example embodiments. A visitor may want to travel using an electric vehicle 802 from a source location 804 to a destination location 806. The vehicle 802 may communicate with the assessment platform 102 to request navigation assistance. The assessment platform 102 may determine a first route 808 in the manner described with reference to step 702 of FIG. 7. Thereafter, the assessment platform 102 may compute charging data corresponding to the first route 808. In some scenarios, the vehicle 802 may have a low charge-such as less than 25% of its battery capacity-at the source location 804. Consequently, to traverse the first route, intermediate charging of the vehicle 802 may be required. The assessment platform 102 may execute the steps 704-706 of FIG. 7 to determine a charging point 810 that satisfies all the factors governing the charging of the vehicle 802 (i.e., the charging requirement data of the vehicle 802). Accordingly, the assessment platform 102 may generate a second route 812 by modifying the first route 808 to include a detour at the charging station 810. Thus, the vehicle 802 can replenish its battery reserve at the charging station 810 and continue the journey on the second route 812 to reach the destination 806. In this way, embodiments of the present disclosure lead to an increase in the operable range of the vehicle 802.

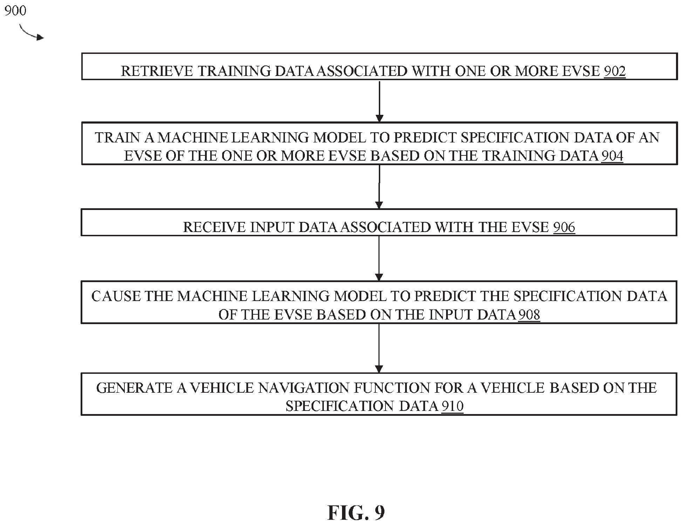

FIG. 9 illustrates a flowchart of a method 900 for predicting specification data of one or more charging units, in accordance with one or more example embodiments. It will be understood that each block of the flow diagram of the method 900 may be implemented by various means, such as hardware, firmware, processor, circuitry, and/or other communication devices associated with the execution of software including one or more computer program instructions. For example, one or more of the procedures described above may be embodied by computer program instructions. In this regard, the computer program instructions that embody the procedures described above may be stored by the memory 204 of the assessment platform 102, employing an embodiment of the present invention and executed by the processor 202. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions that execute on the computer or other programmable apparatus provide operations for implementing the functions specified in the flow diagram blocks.

Accordingly, blocks of the flow diagram 900 may support combinations of means for performing the specified functions and combinations of operations for performing the specified functions for performing the specified functions. It will also be understood that one or more blocks of the flow diagram, and combinations of blocks in the flow diagram, may be implemented by special-purpose hardware-based computer systems that perform the specified functions, or combinations of special-purpose hardware and computer instructions.

At block 902, the method 900 may include retrieving training data associated with each charging unit of the one or more charging units. For example, the training data may be obtained from a suitable storage such as one or more of the databases 108, 112, or 116 of FIG. 1. The training data of each charging unit of the one or more charging units comprises charging event data pertaining to one or more charging events associated with the corresponding charging unit of the one or more charging units.

At block 904, the method 900 may include training a machine learning model to predict specification data of a charging unit of the one or more charging units based on the training data. The machine learning model may be trained using the training data in a manner described with respect to the model training operations 404 of FIG. 4A. At block 906, the method 900 may include receiving input data associated with the charging unit. According to some embodiments, the input data may include data associated with one or more of the charging units, a charging point associated with the charging unit, or a vehicle desirous of charging using the charging unit.

At block 908, the method 900 comprises causing the machine learning model to predict the specification data of the charging unit based on the input data. Details regarding the prediction of the specification data are described previously with respect to the operations for model deployment 408 and the operations for specification data prediction 410 of FIG. 4A. At block 910 the method 900 comprises generating a vehicle navigation function for the vehicle based on the specification data. The generation of vehicle navigation function may be carried out in the manner described previously with respect to the operations for navigation function generation 412 of FIG. 4A and step 514 of FIG. 5.

Additionally, the method 900 may include a step of outputting the navigation function. Additionally, or alternatively, the method 900 may include a step of generating one or more navigation instructions for the vehicle to reach a destination via at least one charging point where the vehicle may be charged.

Therefore, in accordance with various embodiments of the present disclosure, the electric vehicle charging infrastructure may be utilized efficiently using the systems and methods described herein. The various example embodiments provide an improved charging infrastructure management approach that facilitates lower waiting times for charging vehicles, ensures compatibility between vehicles and the charging infrastructure, and enhances the driving range of electric vehicles by replacing hit and trial attempts for charging of the vehicles with a streamlined and directed charging schedule for charging of the vehicles. In essence, various example embodiments lead to better utilization of charging infrastructures while reducing the possibility of malfunctioning of such infrastructure due to incompatibility between the vehicles and infrastructure.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system, comprising:
a memory configured to store computer-executable instructions; and
one or more processors configured to execute the instructions to:
retrieve training data associated with each charging unit of one or more charging units configured to supply power to electric vehicles, wherein the training data associated with each charging unit of the one or more charging units comprises charging event data pertaining to one or more charging events associated with the corresponding charging unit of the one or more charging unit;
train a machine learning model to predict specification data of a charging unit based on the training data;
receive input data associated with the charging unit;
cause the machine learning model to predict the specification data based on the input data; and
generate a vehicle navigation function for a vehicle based on the specification data.

2. The system of claim 1, wherein, to generate the vehicle navigation function, the one or more processors are configured to execute the instructions to:
obtain charging data associated with the vehicle;
determine charger requirement data for the vehicle based on the charging data;
determine whether the specification data satisfies the charger requirement data;
responsive to the specification data satisfying the charger requirement data, generate vehicle navigation instructions for a route starting from a source location and terminating at a location associated with the charging unit; and
output the vehicle navigation instructions on a user interface or cause the vehicle to traverse at least a portion of the route based on the vehicle navigation instructions.

3. The system of claim 2, wherein the charging data associated with the vehicle comprises a current charge level of a battery of the vehicle, a desired final charge level of the battery of the vehicle, a rated charging current for the battery of the vehicle, a rated charging voltage for the battery of the vehicle, a current temperature of the battery of the vehicle, a maximum temperature for the battery of the vehicle, or a combination thereof.

4. The system of claim 2, wherein the charger requirement data comprises one or more specifications of service equipment for charging the vehicle, wherein the one or more specifications include a connector type or connector electrical specifications.

5. The system of claim 1, wherein the training data associated with each charging unit of the one or more charging units indicates:
a charging duration of each charging event of the one or more charging events;
a start time stamp associated with each charging event of the one or more charging events;
an end time stamp associated with each charging event of the one or more charging events;
a type of vehicle associated with each charging event of the one or more charging events;
a model and make of the vehicle associated with each charging event of the one or more charging events; or
a combination thereof.

6. The system of claim 1, wherein the training data associated with each charging unit of the one or more charging units indicates vehicle distance travel (VDT) data of a road link associated with the corresponding charging unit of the one or more charging units.

7. The system of claim 1, wherein the training data associated with each charging unit of the one or more charging units indicates trip data associated with the corresponding charging unit of the one or more charging units.

8. The system of claim 1, wherein the training data associated with each charging unit of the one or more charging units indicates one or more user interactions with a user application associated with said charging unit on a user equipment, the one or more user interactions pertaining to each charging event of the one or more charging events

9. The system of claim 1, wherein the specification data indicates a connector standard, a connector power, a connector voltage, or a combination thereof.

10. The system of claim 1, wherein the machine learning model is a first machine learning model, and wherein the one or more processors are further configured to execute the instructions to train a second machine learning model to predict non-availability of a connector specification of the charging unit based on the training data.

11. The system of claim 1, wherein the training data are first training data, wherein the charging event data are first charging event data, wherein the machine learning model is a first machine learning model, and wherein the one or more processors are further configured to execute the instructions to:
retrieve second training data of each charging point of one or more charging points, wherein the second training data of each charging point of the one or more charging points comprises second charging event data pertaining to one or more charging events associated with the corresponding charging point of the one or more charging points; and
train a second machine learning model to predict a probability score of a connector specification of a charging point being compatible with the vehicle based on the second training data.

12. A computer-implemented method, comprising:
retrieving training data associated with each charging unit of one or more charging units configured to supply power to electric vehicles, wherein the training data of each charging unit of the one or more charging units comprises charging event data pertaining to one or more charging events associated with the corresponding charging unit of the one or more charging units;
training a machine learning model to predict specification data of a charging unit of the one or more charging units based on the training data;
receiving input data associated with the charging unit;
causing the machine learning model to predict the specification data of the charging unit based on the input data; and
generating a vehicle navigation function for a vehicle based on the specification data.

13. The computer-implemented method of claim 12, wherein generating the vehicle navigation function comprises:
obtaining charging data associated with the vehicle;
determining charger requirement data for the vehicle based on the charging data;
determining whether the specification data satisfies the charger requirement data;
responsive to the specification data satisfying the charger requirement data, generating vehicle navigation instructions for a route starting from a source location and terminating at a location associated with the charging unit; and
outputting the vehicle navigation instructions on a user interface or causing the vehicle to traverse at least a portion of the route based on the vehicle navigation instructions.

14. The computer-implemented method of claim 13, wherein the charging data associated with the vehicle comprises a current charge level of a battery of the vehicle, a desired final charge level of the battery of the vehicle, a rated charging current for the battery of the vehicle, a rated charging voltage for the battery of the vehicle, a current temperature of the battery of the vehicle, a maximum temperature for the battery of the vehicle, or a combination thereof.

15. A non-transitory computer readable storage medium including one or more sequences of one or more instructions which, when executed by one or more processors, causes an apparatus to:
retrieve training data associated with each charging unit of one or more charging units, wherein the training data of each charging unit of the one or more charging units comprises charging event data pertaining to one or more charging events associated with the corresponding charging unit of the one or more charging units;
train a machine learning model to predict specification data of a charging unit, based on the training data;
receive input data associated with the charging unit;
cause the machine learning model to predict the specification data of the charging unit based on the input data; and
generate a vehicle navigation function for a vehicle based on the specification data.
